# EUROPEAN PATENT APPLICATION

(11) **EP 4 063 644 A1**
(43) Date of publication of application: **28.09.2022**
(21) Application number: 21165102.1
(22) Date of filing: 26.03.2021
(51) Int. Cl.: F03D 7/02

(54) **CONTROLLING YAW TORQUE IN A WIND TURBINE**

(71) Applicant: Siemens Gamesa Renewable Energy A/S, 7330 Brande (DK)
(72) Inventor: Brun, Soeren Trabjerg, 7300 Jelling (DK); Hoegh, Gustav, 7100 Vejle (DK)
(74) Representative: SGRE-Association

(57) **Abstract**

A wind turbine (1) includes:
a wind rotor (5) having at least one wind blade (4),
a nacelle (3) on which wind rotor (5) is rotatably mounted for rotating about a rotational axis (Y),
a tower (2) on which the nacelle (3) is rotatably mounted for rotating about a yaw axis (Z),
an actuator (10) for rotating the nacelle (3) about the yaw axis (Z) to the nacelle (3),
a sensor (30) for measuring at least a parameter associated to an actual torque (300) of the nacelle (3) about the yaw axis (Z),
a brake (20) for applying a braking torque (200) about the yaw axis (Z) to the nacelle (3),
a controller (100) connected to the sensor (30) for receiving the parameter and determining the actual torque (300), the controller (100) being connected to the brake (20) for applying to or removing the braking torque (200) from the nacelle (3), the controller (100) being configured for determining an actuation torque (100) for moving the nacelle (3) to a desired position about the yaw axis (Z), based on the value of the actual torque (300) and/or the value of the braking torque (200).

## Description

### Field of invention

The present invention relates to a device and a method for controlling yaw torque in a wind turbine.

### Art Background

A wind turbine typically comprises a tower which may mounted on a foundation at one bottom end. The foundation may be fixed to the ground in onshore installations or may be a floating installation in off installations. At the opposite top end of the tower there is mounted a nacelle. The nacelle is usually mounted rotatable with regard to the tower about a yaw axis substantially parallel to the tower. Furthermore, the wind turbine comprises a wind rotor comprising one or more wind blades, which is rotatably attached to the nacelle for rotating about a rotational axis.

The above-described wind turbine further comprises a yaw actuator providing a torque for yawing the nacelle, i.e. changing the orientation of the nacelle about the yaw axis. This may be achieved through one or more motors associated with a gearbox. The above-described wind turbine further comprises a braking device for preventing yawing of the nacelle when a fixed orientation is requested. Such a device may be a mechanical brake.

If no yawing is requested the blocking device has to counter any torque generated by the wind rotor and transferred to the nacelle. If yawing is requested the braking device is disengaged so that the nacelle can start yawing. In the latter cases, to prevent uncontrolled yawing of the nacelle the torque applied by the actuator to the nacelle may be increased to maximum before the braking device is disengaged, thereby maintaining control of the rotation of the nacelle about the yaw axis. However, this may put unnecessary stress on mechanical parts of the actuator and of the braking device and further cause fatigue problems.

It is therefore desirable to efficiently control the yaw torque applied to the nacelle to avoid the above-described inconveniences.

### Summary of the Invention

This objective may be solved by the permanent electrical machine according to the independent claims. Advantageous embodiments of the present invention are described by the dependent claims.

According to a first aspect of the present invention, a wind turbine is provided, which includes:
a wind rotor having at least one wind blade,
a nacelle on which wind rotor is rotatably mounted for rotating about a rotational axis,
a tower on which the nacelle is rotatably mounted for rotating about a yaw axis,
an actuator for rotating the nacelle about the yaw axis to the nacelle.

The wind turbine further includes:
a sensor for measuring at least a parameter associated to an actual torque of the nacelle about the yaw axis,
a brake for applying a braking torque about the yaw axis to the nacelle,
a controller connected to the sensor for receiving the parameter and determining the actual torque, the controller being connected to the brake for applying to or removing the braking torque from the nacelle, the controller being configured for determining an actuation torque for moving the nacelle to a desired position about the yaw axis, based on the value of the actual torque and/or the value of the braking torque.

According to a second aspect of the present invention a method of operating a wind turbine is provided. The wind turbine includes:
a wind rotor having at least one wind blade,
a nacelle on which wind rotor is rotatably mounted for rotating about a rotational axis,
a tower on which the nacelle is rotatably mounted for rotating about a yaw axis,
The method includes the step of:
applying a braking torque to the nacelle for keeping the nacelle at a first desired position,
determining an actual torque about the yaw axis to the nacelle,
determining an actuation torque for moving the nacelle to a second desired position about the yaw axis, the actuation torque being based on the value of the actual torque and/or the value of the braking torque,
removing braking torque from the nacelle and applying the actuation torque to the nacelle.

The present invention avoids overshooting in the value of the actuation torque, thus significantly reducing the stress on the mechanical parts of the actuator. "Torque" according to the present invention is to be considered always as a positive value. If relevant a clockwise of counterclockwise direction is to be specified. Clockwise or counterclockwise may be defined, for example, for an observer on top of the wind turbine and looking from the nacelle to the foundation of the tower.

The controller of the present invention prevents overshooting of braking torque, too. According to the present invention, the braking torque compensates the actual torque, for keeping the nacelle fixed at a first desired angular position about the yaw axis, or the braking torque is reduced to zero or closed thereto for allowing the actuator to move the nacelle to a second desired angular position about the yaw axis. No overshooting of the braking torque below the value of the actual torque is required.

With "sensor" it is meant any device capable of measuring the actual torque on the nacelle about the yaw axis, which is caused by the action of the wind on the wind rotor, in particular on the blades. For example, sensors which may be used are blade root sensors measuring the loads on the blades and/or main shaft sensors measuring the bending of the rotor shaft and/or tower torsion sensors.

According to embodiments of the method according to the present invention, before the activation of the actuator the nacelle is in equilibrium at a first desired angular position about the yaw axis. In such position the actual torque is balanced by the braking torque. The actual torque is measured by the sensor. To move the nacelle to a second desired angular position about the yaw axis the braking torque is removed, and the actuation torque is applied. If the nacelle is to be rotated in the same direction of the actual torque, the actuation torque is to be added to the actual torque. The resultant of the actuation torque and the actual torque is within a predefined torque interval comprised between a minimum threshold and a maximum threshold, the minimum threshold being the actual torque before the application of the actuation torque. Similarly, if the nacelle is to be rotated in the opposite direction of the actual torque, the actuation torque is also acting in the opposite direction and is to be subtracted from the actual torque. The resultant of the actuation torque and the actual torque is within a predefined torque interval comprised between a minimum threshold and a maximum threshold, the minimum threshold being zero.

According to embodiments of the present invention, the actuation torque may be measured or estimated by the controller. A measurement of the braking torque may also be performed.

According to embodiments of the method of the present invention, it may be beneficial to apply a slightly higher actuation torque than required initially, to cover uncertainties.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic section of a wind turbine including embodiments of the present invention.
Fig. 2 shows a schematic top view of the wind turbine of figure 1.
Fig. 3 shows a first graph illustrating steps of a first embodiment of an operating method according to the present invention.
Fig. 4 shows a second graph illustrating steps of a second embodiment of an operating method according to the present invention.
Fig. 5 shows a third graph illustrating steps of a third embodiment of an operating method according to the present invention.
Fig. 6 shows a fourth graph illustrating steps of a fourth embodiment of an operating method according to the present invention.

### Detailed Description

The illustrations in the drawings are schematically. It is noted that in different figures, similar or identical elements are provided with the same reference signs.

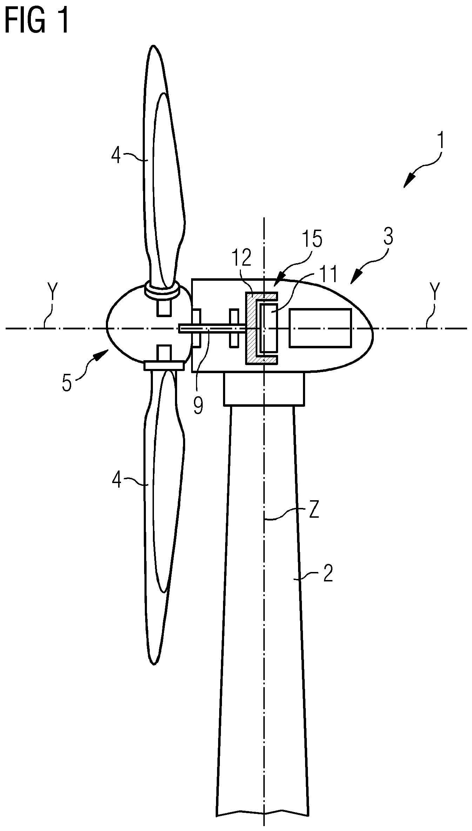

**Figure** 1 shows a partial cross-sectional view of a wind turbine 1 including an electrical generator 10. The wind turbine 1 comprises a tower 2, which is mounted on a non-depicted foundation. The foundation may be fixed to the ground (onshore application) or may be a floating foundation (offshore application). A nacelle 3 is arranged on top of the tower 2. The nacelle 3 is mounted on the tower 2 to be rotatable about a yaw axis Z, substantially parallel to the tower 2. The wind turbine 1 further comprises at least a wind rotor 5 having a hub and at least one wind blade 4 (in the embodiment of Figure 1, the wind rotor comprises three blades 4, of which only two blades 4 are visible). The wind rotor 5 is rotatable around a rotational axis Y. The blades 4 extend substantially radially with respect to the rotational axis Y. The electrical generator 10 includes a stator 11 and a rotor 12. The rotor 12 is rotatable with respect to the stator 11 about the rotational axis Y. The wind rotor 5 is rotationally coupled with the rotor 12 of the electrical generator 10 either directly, e.g. direct drive or by means of a rotatable main shaft 9 and through a gear box (not shown in Figure 1). The rotatable main shaft 9 extends along the rotational axis Y.

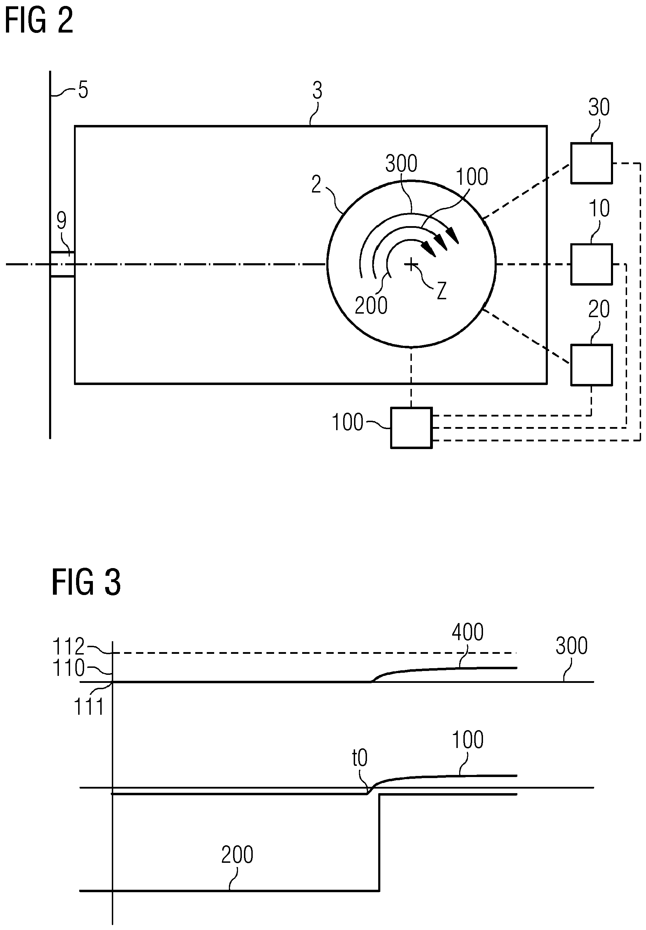

**Figure 2** shows a schematic top view of a wind turbine 1, showing the wind rotor 5, the main shaft 9 attached to the wind rotor 5, the nacelle 3 connected to the wind rotor 5 through the main shaft 9 and the tower 2, on which the nacelle 3 is rotatably mounted. The wind acting on the wind rotor 5 causes the wind rotor 5 to rotate about the rotational axis Y and generates an actual torque 300 about the yaw axis Z. The actual torque 300 is active on the nacelle 3 for rotating the nacelle 3 about the yaw axis Z. The wind turbine 1 comprises one or more sensors 30 (schematically represented in figure 2) for measuring one or more parameter associated with the actual torque 300. The sensor(s) 30 may be one or more blade root sensors measuring the loads on the blades 4 and/or one or more main shaft sensors measuring the bending of the main rotor shaft 9 and/or one or more tower torsion sensors measuring the torsion on the tower caused by the actual torque 300 acting on the nacelle 3. The wind turbine 1 further includes an actuator 10 (schematically represented in figure 2) for rotating the nacelle 3 about the yaw axis Z, so that the nacelle 3 can reach a desired angular position about the yaw axis Z. When active the actuator applies an actuation torque 100 to the nacelle 3 for driving the nacelle 3 to the desired position. The actuator may include an electrical motor. The motor may be coupled to the nacelle 3 through a gearbox. The gearbox 3 may include a pinion coupled with a fixed yaw tooth ring on the turbine tower. According to other embodiments of the present invention, the wind turbine 1 may comprise another type of actuator, which can apply an actuation torque 100 to the nacelle 3. The wind turbine 1 further includes a brake 20 (schematically represented in figure 2) for applying a braking torque 200 about the yaw axis Z to the nacelle 3. The braking torque 200 and the actual torque 300 having opposite directions, so that the brake 20 can block the nacelle 3 in the desired position about the yaw axis Z. The actual torque may be determined by measuring the braking torque 200 which balances the actual torque 300. The wind turbine 1 may include further sensors associated to the actuator 10 and/or the brake for respectively measuring the actuation torque 100 and/or braking torque 200. Alternatively, the actuation torque 100 may be estimated by a controller associated to the actuator 10.

The wind turbine 1 further includes a controller 100 (schematically represented in figure 2) connected to the sensor 30 for receiving the actual torque 300. The controller 100 is configured for determining the actuation torque 100 for moving the nacelle 3 to a desired position about the yaw axis Z. The controller 100 is connected to the actuator 10 for controlling the actuator 10 in such a way that the actuation torque 100 is applied to the nacelle 3. The controller 100 may be optionally connected to the brake 20 for applying to or removing the braking torque 200. The controller 100 is configured in such a way that the actuation torque 100 is always compatible with the movement to be performed, without reaching excessive values. This is possible because the controller 100 can calculate the actual torque 300.

**Figure 3** illustrates a first embodiment for operating the wind turbine 1, so that the actuation torque 100 is managed, in order to reduce overloading and fatigue. Before the actuation time t0, the nacelle 3 is in equilibrium at a first desired angular position about the yaw axis Z. Before the actuation time t0, the actual torque 300 is equal and opposite to the braking torque 200. Through the measurements of the sensor 30, the controller 100 determines the actual torque 300. At the actuation time t0, the braking torque 200 is removed and the actuator 20 is activated to move the nacelle to a second desired angular position about the yaw axis Z. In the embodiment of figure 3, the nacelle 3 is to be rotated in the same direction of the actual torque 300. The actuation torque 100 at the actuation time t0 is zero and is progressively increased after the instant t0 up to a steady state value which is required for moving the nacelle. The calculation of the required actuation torque 100 to be produced as output by the controller 100 is based on the values of the actual torque 300 (and therefore o the breaking torque 200) used as input. The resultant 400 of the actuation torque 100 and the actual torque 300 at the steady state is within a predefined torque interval 110 comprised between a minimum threshold 111 and a maximum threshold 112. The minimum threshold 111 corresponds to the actual torque 300 before the actuation time t0.

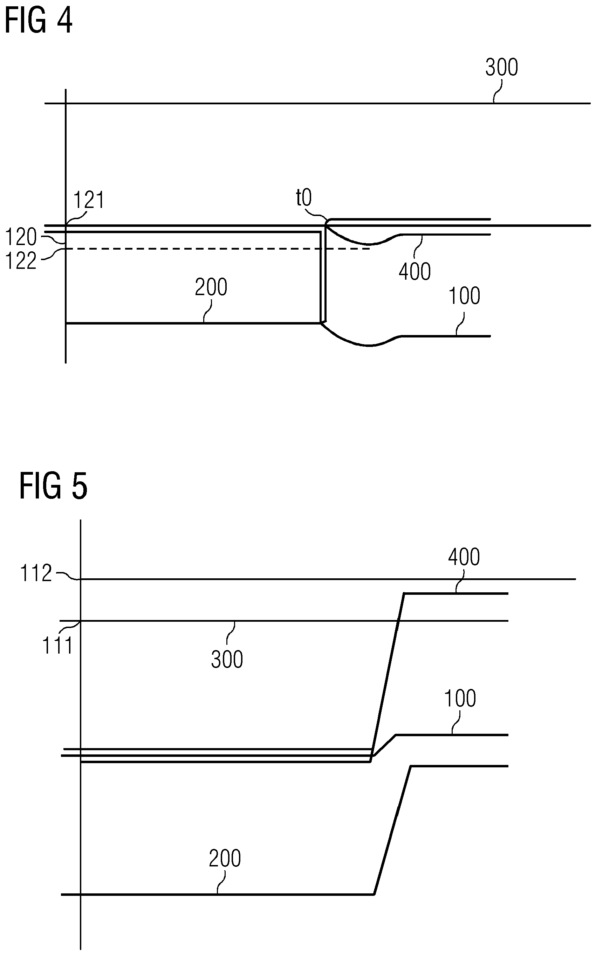

**Figure 4** illustrates a second embodiment for operating the wind turbine 1, so that the actuation torque 100 is managed. The second embodiment differentiate itself from the first embodiment in that the nacelle 3 is to be rotated in the opposite direction of the actual torque 300 at the actuation time t0. At the actuation time t0, the braking torque 200 is removed and the actuator 20 is activated. The actuation torque 100 at the actuation time t0 is equal and opposite to the actual torque 300 and is progressively increased after the instant t0 to reach a steady state value. The resultant 400 of the actuation torque 100 and the actual torque 300 is within a predefined torque interval 120 comprised between a minimum threshold 121 and a maximum threshold 122. The minimum threshold 121 is zero.

**Figure 5** illustrates a third embodiment for operating the wind turbine 1, so that the actuation torque 100 is managed. The third embodiment is similar to the first one, with the difference that the braking torque 200 is not removed instantly, but according to a ramp. Consequently, the actuation torque 100 follows a ramp, too. The actuation torque 100 reaches a steady state value, after the the braking torque 200 has reached the zero value.

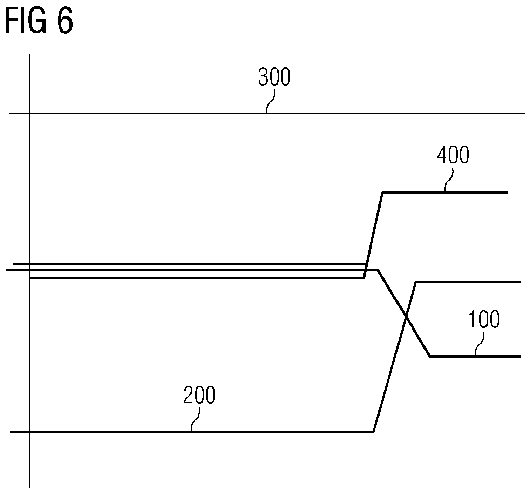

**Figure 6** illustrates a fourth embodiment for operating the wind turbine 1, so that the actuation torque 100 is managed. The fourth embodiment is similar to the second one, with the difference that the braking torque 200 is not removed instantly, but according to a ramp. Consequently, the actuation torque 100 follows a ramp, too. The actuation torque 100 reaches a steady state value, after the the braking torque 200 has reached the zero value.

According to other embodiment (not shown), the braking torque 200 may be varied according to other patterns and/or the actual torque 300 may not be constant. Knowing the values the braking torque 200 and of the actual 300 permits the controller to determine and apply the required actuation torque 100 to reach the desired portion(s) of the nacelle about the yaw axis, without reaching excessive dangerous values.

## Claims

1. A wind turbine (1) including:
a wind rotor (5) having at least one wind blade (4),
a nacelle (3) on which wind rotor (5) is rotatably mounted for rotating about a rotational axis (Y),
a tower (2) on which the nacelle (3) is rotatably mounted for rotating about a yaw axis (Z),
an actuator (10) for rotating the nacelle (3) about the yaw axis (Z) to the nacelle (3),
wherein the wind turbine (1) further includes:
a sensor (30) for measuring at least a parameter associated to an actual torque (300) of the nacelle (3) about the yaw axis (Z),
a brake (20) for applying a braking torque (200) about the yaw axis (Z) to the nacelle (3),
a controller (100) connected to the sensor (30) for receiving the parameter and determining the actual torque (300), the controller (100) being connected to the brake (20) for applying to or removing the braking torque (200) from the nacelle (3), the controller (100) being configured for determining an actuation torque (100) for moving the nacelle (3) to a desired position about the yaw axis (Z), based on the value of the actual torque (300) and/or the value of the braking torque (200).

2. The wind turbine (1) according to claim 1, wherein the resultant of the actual torque (300) and the actuation torque (100) is comprised between a minimum threshold and a maximum threshold.

3. The wind turbine (1) according to claim 2, wherein the minimum threshold is the actual torque (300) when the nacelle (3) is moved by the actuation torque (100) in the same direction of the actual torque (300).

4. The wind turbine (1) according to claim 2, wherein the minimum threshold is zero when the nacelle (3) is moved by the actuation torque (100) in the opposite direction of the actual torque (300).

5. A method of operating a wind turbine (1) including:
a wind rotor (5) having at least one wind blade (4),
a nacelle (3) on which wind rotor (5) is rotatably mounted for rotating about a rotational axis (Y),
a tower (2) on which the nacelle (3) is rotatably mounted for rotating about a yaw axis (Z),
wherein the method includes the step of:
applying a braking torque (200) to the nacelle (3) for keeping the nacelle at a first desired position,
determining an actual torque (300) about the yaw axis (Z) to the nacelle (3),
determining an actuation torque (100) for moving the nacelle (3) to a second desired position about the yaw axis (Z), the actuation torque (100) being based on the value of the actual torque (300) and/or the value of the braking torque (200),
removing braking torque (200) from the nacelle (3) and applying the actuation torque (100) to the nacelle (3).

6. The method according to claim 5, wherein the resultant of the actual torque (300) and the actuation torque (100) is comprised between a minimum threshold and a maximum threshold.

7. The method according to claim 6, wherein the minimum threshold is the actual torque (300) when the nacelle (3) is moved by the actuation torque (100) in the same direction of the actual torque (300).

8. The method according to claim 6, wherein the maximum threshold is the actual torque (300) when the nacelle (3) is moved by the actuation torque (100) in the opposite direction of the actual torque (300).

9. The method according to any of the claims 5 to 8, wherein the method includes the further step of measuring or estimating the actuation torque (100) and/or the braking torque (200) .
